## Europäisches Patentamt

## European Patent Office

## Office européen des brevets

(19)

(11) Veröffentlichungsnummer: **0 148 424**
**B1**

(12) **EUROPÄISCHE PATENTSCHRIFT**

(45) Veröffentlichungstag der Patentschrift:
**08.06.88**

(21) Anmeldenummer: **84114884.4**

(22) Anmeldetag: **06.12.84**

(51) Int. Cl.⁴: **F 16 D  13/08,** F 16 H  1/20

(54) **Freilaufanordnung für ein gleichachsig gelagertes Zahnradpaar eines Laufwerkes.**

(30) Priorität: **22.12.83  DE 3346373**

(43) Veröffentlichungstag der Anmeldung:
**17.07.85 Patentblatt 85/29**

(45) Bekanntmachung des Hinweises auf die Patenterteilung:
**08.06.88 Patentblatt 88/23**

(84) Benannte Vertragsstaaten:
**DE FR GB IT**

(56) Entgegenhaltungen:
**DE-A-2 632 451**
**DE-C-402 576**
**FR-A-2 367 225**
**GB-A-1 138 652**
**GB-A-1 348 013**
**US-A-1 985 387**
**US-A-2 673 730**
**US-A-3 006 448**
**US-A-3 111 822**
**US-A-3 344 686**

(73) Patentinhaber: **Mannesmann Kienzle GmbH,
Heinrich- Hertz- Strasse, D-7730 Villingen-
Schwenningen (DE)**

(72) Erfinder: **Kirner, Herbert, Wolfstiegweg 4, D-7730
Villingen- Schwenningen (DE)**
Erfinder: **Helmschrott, Norbert, Wasenstrasse 94,
D-7730 Villingen- Schwenningen (DE)**

LIBER, STOCKHOLM 1988

EP 0 148 424 B1

### Beschreibung

Die Erfindung betrifft eine Freilaufanordnung für ein gleichachsig gelagertes Zahnradpaar eines Laufwerkes mit einer Schlingfeder, welche mit Vorspannung auf an den beiden Zahnrädern angeformten, zylindrischen Ansätzen gleichen Durchmessers angeordnet ist.

Die konsequente Anwendung eines Laufwerkes bzw. des dem Laufwerk zugeordneten Motors bedingt, daß auch die Möglichkeit der Drehrichtungsumkehr als mechanische Schaltfunktion genutzt wird mit dem Ziel, daß beispielsweise von wenigstens zwei durch das Laufwerk angetriebenen Aggregaten eines bei der einen einem bestimmten Zustand zugeordneten Drehrichtung des Motors vom Antrieb abgekuppelt ist. Derartige Bedingungen sind beispielsweise in Fahrtschreibern gegeben, wo bei Fahrt des Fahrzeuges ein Streckenzählwerk, ein Streckenregistrierorgan und ein Arbeitszeitregistrierorgan von einem Schrittmotor angetrieben werden, welcher auch bei Stillstand des Fahrzeuges den Antrieb für die weiterhin erforderliche Betätigung des Arbeitszeitregistrierorgans liefert.

Ein derartiges, drehrichtungsabhängiges Kuppeln kann bekanntlich mittels einer Freilaufanordnung, beispielsweise eines Zahnrichtgesperres oder eines Klemmgesperres, realisiert werden. Bei einer Vielzahl von Anwendungsfällen in der Feinwerktechnik, wo mit dem Laufwerk nur geringe Drehmomente zu übertragen sind und weder hohe Drehzahlen noch wesentliche Beschleunigungen auftreten, lassen sich für diesen Zweck vorteilhaft sog. Schlingfederkupplungen einsetzen, bei denen die Schlingfeder mit den zu kuppelnden Getriebeelementen in friktioneller Verbindung steht und die Kupplung "geschlossen" ist, wenn die zu kuppelnden Getriebeteile relativ zueinander in Windungsrichtung der Schlingfeder bewegt werden bzw. die Kupplung sich "öffnet" oder "geöffnet" ist, wenn die Drehrichtung entgegen der Windungsrichtung der Schlingfeder erfolgt und bei einer bestimmten Drehzahl Gleichgewicht zwischen der Friktion und der zusätzlich "eingedrehten" Federvorspannung herrscht.

Schlingfederkupplungen beispielsweise gemäß der GB-A-1 138 652 zeichnen sich gegenüber den genannten Zahnricht- und Klemmgesperren einerseits sowohl durch geringen Raumbedarf als auch durch geringen Teile- und Montageaufwand, andererseits durch Funktionssicherheit, einen sehr kleinen Verlustwinkel bei Drehrichtungsumkehr und wenig Geräuschentwicklung aus. Dies gilt insbesondere dann, wenn die Schlingfeder mit einer leichten, axialen Vorspannung gefertigt ist und der verwendete Federdraht einen quadratischen oder rechteckförmigen Querschnitt aufweist.

Nachteilig bei den bisher bekannten Bauformen solcher Schlingfederkupplungen ist, daß infolge der zwischengeschalteten Schlingfeder ein relativ großer, axialer Abstand zwischen den beiden gleichachsig gelagerten Getriebeelementen eingehalten werden muß. Solche Bauformen sind daher für Laufwerke, bei denen, was der Raumnutzung wegen im allgemeinen anzustreben ist, die Zahnräder des Laufwerkes einer einzigen Platine sozusagen platinenparallel zugeordnet sind und somit die Radkörper eines gleichachsig angeordneten Zahnradpaares unmittelbar nebeneinander angeordnet werden müssen, ungeeignet, ungeeignet insbesondere auch deshalb, weil der Austausch eines "starren" Zahnradpaares gegen ein solches, dem eine Schlingfederkupplung bekannter Bauart zugeordnet ist, nicht möglich ist.

Der Erfindung war somit das Ziel gesetzt, diesen Mangel zu beseitigen und eine Freilaufanordnung zu schaffen, die eine vormontierbare, vorzugsweise werkzeuglos steckbare Einheit aus wenigen, leicht herstellbaren Teilen darstellt, welche gegenüber der Montage eines "starren" Zahnradpaares ohne zusätzliche Maßnahmen in den Getriebezug eines Laufwerkes eingefügt werden kann.

Die Lösung dieser Aufgabe sieht vor, daß das eine Zahnrad an einer mit einer Lagerbohrung versehenen, mehrstufigen Welle mit wenigstens drei zylindrischen Ansätzen ausgebildet ist, daß das andere Zahnrad als Zahnkranz an einem auf zwei Ansätzen der Welle gelagerten Gehäuse angeformt ist, daß in dem Gehäuse ein der Schlingfeder zugeordneter Sitz ausgebildet ist und daß Mittel zur axialen Lagesicherung von Welle und Gehäuse vorgesehen sind.

Ein bevorzugtes Ausführungsbeispiel ist dadurch gekennzeichnet, daß das Gehäuse von zwei koaxial ineinander angeordneten und stirnseitig miteinander verbundenen, zylindrischen Hülsen unterschiedlicher Länge gebildet ist, wobei der Innendurchmesser der äußeren Hülse dem Durchmesser des größten Ansatzes der Welle entspricht, der Außendurchmesser der inneren, kürzeren Hülse gleich ist dem Durchmesser des mittleren Ansatzes der Welle und der Innendurchmesser der inneren Hülse dem Durchmesser des kleinsten Ansatzes der Welle entspricht und daß zur Lagesicherung von Welle und Gehäuse axial wirkende Rastmittel ausgebildet sind.

Der Vorteil, den die Erfindung bietet, besteht, abgesehen davon, daß die gestellte Aufgabe zufriedenstellend gelöst ist, zusätzlich darin, daß das vorgesehene Gehäuse eine Kapselung für die Schlingfeder darstellt, die Verschmutzung und durch Verschmutzung bedingte Veränderungen der friktionellen Verhältnisse der Freilaufanordnung weitgehend vermeidet und die Freilaufanordnung wartungsfrei macht. Außerdem ist vorteilhaft, daß bei der gefundenen Bauform die beiden Zahnräder jeweils einen relativ großen Lagerstellenabstand aufweisen, so daß grobe Lagertoleranzen gewählt werden können. Somit ist auch, abgesehen davon, daß die Freilaufanordnung nur mit drei Teilen realisiert werden kann, eine gute Eignung für die Serienfertigung und aufgrund einer problemlosen Miniaturisierbarkeit eine vielseitige Verwendbarkeit gegeben. Ferner bietet, indem der Zahnkranz an einer beliebigen Stelle des Gehäuses ausgebildet sein kann, die gefundene Bauform unabhängig von der Länge der Schlingfeder eine Wahlmöglichkeit bezüglich des axialen Abstandes der beiden Zahnräder der Freilaufanordnung. Denkbar ist in diesem Zusammenhang auch, das Gehäuse über einen größeren Bereich oder die gesamte Länge zu verzahnen, wodurch eine weitgehende Unabhängigkeit von der Lage des in die Verzahnung des Gehäuses eingreifenden Zahnrades erzielt wird.

Im folgenden wird die Erfindung anhand der beigefügten Zeichnungen näher erläutert. Es zeigt

FIG. 1 ein Schnittbild der erfindungsgemäßen Freilaufanordnung,

FIG. 2 ein Ausführungsbeispiel für eine Steckverbindung zwischen Hülse und Welle,

FIG. 3 eine Schnittdarstellung einer Rädergruppe eines Laufwerkes in der die erfindungsgemäße Freilaufanordnung eingefügt ist.

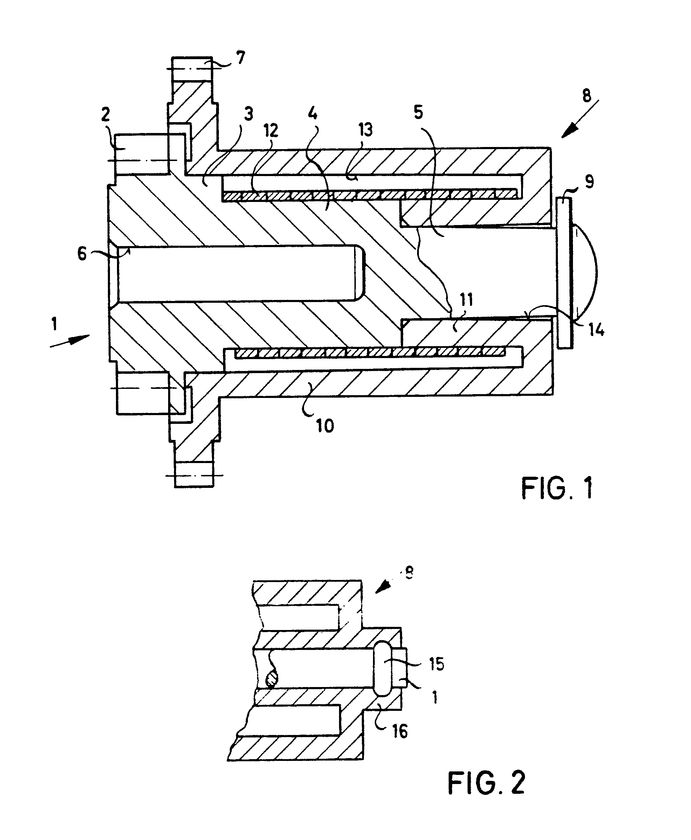

Gemäß FIG. 1 ist mit 1 eine Welle bezeichnet, an welcher wenigstens ein Zahnrad 2 und drei zylindrische Ansätze 3, 4 und 5 spritzgußtechnisch ausgebildet sind und welche mit einer Lagerbohrung 6 versehen ist. Auf der Welle 1 bzw. auf deren Ansätzen 3 und 5, deren zylindrische Laufflächen nicht näher bezeichnet sind, ist ein einen Zahnkranz 7 tragendes und ebenfalls als Spritzgußteil ausgebildetes Gehäuse 8 gelagert und durch eine mit dem Ansatz 5 der Welle 1 beispielsweise durch Kaltstauchen verbundene Laufscheibe 9 axial gesicher. Der Zahnkranz 7 bzw. dessen Radraum grenzt, was beabsichtigt war, bei der erfindungsgemäßen Bauform unmittelbar an den Radraum des Zahnrades 2 an, er kann aber auch an einer anderen Stelle des Gehäuses 8 angeformt sein.

Wie ferner aus der FIG. 1 ersichtlich ist, besteht das Gehause 8 aus zwei koaxial ineinander angeordneten und stirnseitig miteinander verbundenen, zylindrischen Hülsen 10 und 11 unterschiedlicher Länge. Dabei bildet die innere Hülse 11, deren Außendurchmesser gleich ist dem Durchmesser des Ansatzes 4 der Welle 1, mit dem Ansatz 4 eine gleichmäßige Zylinderfläche, auf der eine Schlingfeder 12, die aus Federdraht mit rechteckförmigem Querschnitt gefertigt ist, mit leichtem Preßsitz und einer gewissen axialen Vorspannung angeordnet ist, während der Innendurchmesser der äußeren Hülse 10 eine erste Lagerbohrung 13 und der Innendurchmesser der inneren Hülse 11 eine zweite Lagerbohrung 14 des Gehäuses 8 darstellen.

Mit einer Ausbildung gemäß FIG. 2 läßt sich die erfindungsgemäße Freilaufanordnung mit drei Bauteilen realisieren, die durch lediglich Zusammenstecken miteinander verbindbar sind. Der axialen Sicherung können gemäß FIG. 2 ein an der Welle 1 ausgebildeter Wulst 15 dienen, der mit einem an dem Gehäuse 8 federungsfähig angeformten Ansatz 16 bzw. einer in dem Ansatz 16 ausgebildeten, nicht näher bezeichneten Nut zusammenwirkt. Denkbar sind andererseits geeignete, in eine in der Welle 1 vorgesehene Nut eingreifende, an dem Gehäuse 8 ausgebildete Rasthaken.

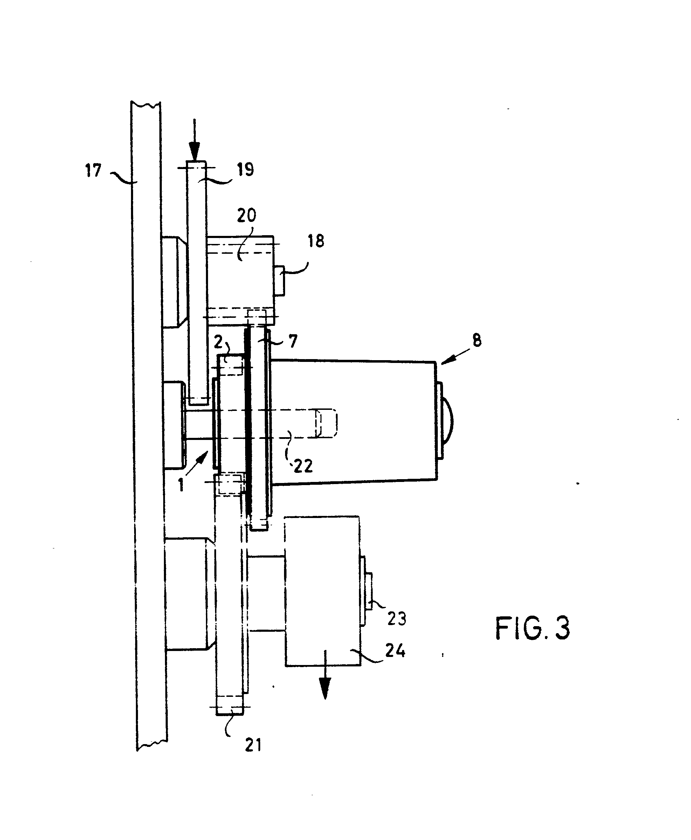

Der Vollständigkeit halber zeigt FIG. 3 das Einfügen der erfindungsgemäßen Freilaufanordnung in ein feinwerktechnisches Laufwerk. Dabei geht der Kraftfluß aus von einem nicht dargestellten Motor, dessen Ritzel mit einem Zahnrad 19 eines auf einer in einer Platine 17 befestigten Achse 18 gelagerten Zahnradpaares 19, 20 in Eingriff steht. Über das Zahnrad 20, das mit dem am Gehäuse 8 der Freilaufanordnung angeformten Zahnkranz 7 kämmt, wird, wenn der Antrieb in Windungsrichtung der Schlingfeder 12 erfolgt, die Welle 1 und somit über das an ihr ausgebildete Zahnrad 2 auch das mit diesem in Eingriff stehende Zahnrad 21 angetrieben. Mit 22 ist eine in der Platine 17 befestigte, der Freilaufanordnung zugeordnete Achse bezeichnet. Auf einer weiteren Achse 23 ist das Zahnrad 21 und ein mit dem Zahnrad 21 verdrehfest verbundenes Getriebeelement 24 gelagert. Der zwischen dem Zahnrad 21 und dem Getriebeelement 24 vorgesehene Einstich dient der Freilaufanordnung als axiale Sicherung.

**Patentansprüche**

1. Freilaufanordnung für ein gleichachsig gelagertes Zahnradpaar (2, 7) eines Laufwerkes mit einer Schlingfeder (12), welche mittels Vorspannung auf an den beiden Zahnrädern angeformten, zylindrischen Ansätzen (4, 11) gleichen Durchmessers angeordnet ist,
   dadurch gekennzeichnet,
   daß das eine Zahnrad (2) an einer mit einer Lagerbohrung (6) versehenen, mehrstufigen Welle (1) mit wenigstens drei zylindrischen Ansätzen (3, 4, 5) ausgebildet ist,
   daß das andere Zahnrad als Zahnkranz (7) an einem auf zwei Ansätzen (3, 5) der Welle (1) gelagerten Gehäuse (8) angeformt ist,
   daß in dem Gehäuse (8) ein der Schlingfeder (12) zugeordneter Sitz ausgebildet ist und
   daß Mittel (9) zur axialen Lagesicherung von Welle (1) und Gehäuse (8) vorgesehen sind.
   2. Freilaufanordnung nach Anspruch 1,
   dadurch gekennzeichnet,
   daß das Gehäuse (8) von zwei koaxial ineinander angeordneten und stirnseitig miteinander verbundenen, zylindrischen Hülsen (10, 11) unterschiedlicher Länge gebildet ist, wobei der Innendurchmesser der äußeren Hülse (10) dem Durchmesser des größten Ansatzes (3) der Welle (1) entspricht, der Außendurchmesser der inneren, kürzeren Hülse (11) gleich ist dem Durchmesser des mittleren Ansatzes (4) der Welle (1) und der Innendurchmesser der inneren Hülse (11) dem Durchmesser des kleinsten Ansatzes (5) der Welle (1) entspricht.

3. Freilaufanordnung nach Anspruch 1 und 2, dadurch gekennzeichnet,
daß zur Begrenzung des Spaltes zwischen den Stirnflächen des mittleren Ansatzes (4) der Welle (1) und der inneren Hülse (11), die den Sitz der Schlingfeder (12) bilden, mit der Welle (1) eine Laufscheibe (9) verbunden ist.

4. Freilaufanordnung nach Anspruch 1 bis 3, dadurch gekennzeichnet,
daß zur Lagesicherung von Welle (1) und Gehäuse (8) axial wirkende Rastmittel ausgebildet sind.

## Claims

1. Freewheel arrangement for a coaxially mounted gear pair (2, 7) of a mechanism with an overrunning clutch spring (12), which is located by means of pre-tension on cylindrical shoulders (4, 11) of the same diameter, formed on the two gears, characterised in that the one gear (2) is constructed on a multi-stage shaft (1) provided with a bearing bore (6), the shaft having at least three cylindrical shoulders (3, 4, 5), that the other gear is formed as a gear rim (7) on a housing (8) mounted on two shoulders (3, 5) of the shaft (1), that constructed in the housing (8) is a seat associated with the overrunning clutch spring (12) and that means (9) are provided for securing the axial position of the shaft (1) and housing (8).

2. Freewheel arrangement according to Claim 1, characterised in that the housing (8) is formed by two cylindrical sleeves (10, 11) of different length, arranged coaxially one in the other and connected to each other at their end faces, the inner diameter of the outer sleeve (10) corresponding to the diameter of the largest shoulder (3) of the shaft (1), the outer diameter of the inner, shorter sleeve (11) bein equal to the diameter of the middle shoulder (4) of the shaft (1) and the inner diameter of the inner sleeve (11) corresponding to the diameter of the smallest shoulder (5) of the shaft (1).

3. Freewheel arrangement according to Claims 1 and 2, characterised in that for limiting the gap between the end faces of the middle shoulder (4) of the shaft (1) and the inner sleeve (11), which form the seat for the overrunning clutch spring (12), a rotor disk (9) is connected to the shaft (1).

4. Freewheel arrangement according to Claims 1 to 3, characterised in that locking means acting axially are provided to secure the position of the shaft (1) and housing (8).

## Revendications

1. Arrangement à roue libre pour un couple de roues dentées (2, 7) à montage isoaxique d'un mecanisme d'entraînement avec un ressort enroulé (12) qui est disposé au moyen d'une tension initiale sur des épaulements cylindriques (4, 11) de même diamètre, moulés sur les deux roues dentées,
caractérisé par le fait
que l'une des roues dentées (2) est formée sur un arbre (1) à plusieurs étages pourvu d'un alésage à palier (6) et d'au moins trois épaulements cylindriques (3, 4, 5), que l'autre roue dentée est moulée comme couronne dentée (7) sur un boîtier (8) monté sur deux épaulements (3, 5) de l'arbre (1),
que dans ledit boîtier (8) est formé un siège associé au ressort enroulé et
que des moyens (9) sont prévus pour l'immobilisation axiale de l'arbre (1) et du boîtier (8).

2. Arrangement à roue libre selon la revendication 1,
caractérisé par le fait
que le boîtier (8) est formé par deux douilles cylindriques (10, 11) dy longueurs différentes, coaxialement imbriquées et reliées l'une à l'autre du côté frontal, le diamètre intérieur de la douille extérieure (10) correspondant au diamètre du plus grand épaulement (3) de l'arbre (1), le diamètre extérieur de la douille intérieure, plus courte, étant égal au diamètre de l'épaulement médian (4) de l'arbre (1) et le diamètre intérieur de la douille intérieure (11) correspondant au diamètre du plus petit épaulement (5) de l'arbre (1).

3. Arrangement à roue libre selon l'une quelconque des revendications 1 et 2,
caractérisé par le fait
que pour la limitation de la fente entre les faces frontales de l'épaulement médian (4) de l'arbre (1) et de la douille interne (11) qui constituent le siège du ressort enroulé (12), un galet de roulement (9) est relié à l'arbre (1).

4. Arrangement à roue libre selon l'une quelconque des revendications 1 à 3,
caractérisé par le fait
que des moyens d'arrêt agissant axialement sont prévus pour l'immobilisation positionnelle de l'arbre (1) et du boîtier (3).

FIG. 1

FIG. 2

FIG. 3